# EUROPEAN PATENT SPECIFICATION

(11) **EP 0 676 904 B1**
(45) Date of publication and mention of the grant of the patent: **02.08.2000**
(21) Application number: 94302491.9
(22) Date of filing: 08.04.1994
(51) Int. Cl.: H04N 11/08

(54) **A colour television system with synthetic color system with periodic color-filter for three primary colors**
Farbfernseh-System mit synthetischem Videofarbensystem mit periodischem Farbfilter für die drei Grundfarben
Système de télévision en couleur avec système de synthèse vidéo en couleur utilisant un filtre couleur périodique pour les trois couleurs primaires

(43) Date of publication of application: 11.10.1995
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(56) References cited:
- GB-A- 656 516
- US-A- 2 727 941
- US-A- 2 740 831
- US-A- 3 783 184
- PATENT ABSTRACTS OF JAPAN vol. 8, no. 277 (E-285) 18 December 1984 & JP-A-59 146 286 (SUWA SEIKOSHA K.K.) 8 February 1983
- PATENT ABSTRACTS OF JAPAN vol. 6, no. 136 (E-120) 23 July 1982 & JP-A-57 062 682 (SONY CORP.) 15 April 1982
- ELECTRONIC ENGINEERING, August 1974 page 4 ANONYMOUS 'Breakthrough in colour displays'

## Description

A synthetic colour television includes a colour-filter assembly made up of filters for each of the three primary colours, and a brightness-sensitive medium for capturing images of objects viewed through the periodically activated filters. The colour-filtering layers for the three primary colours are sequentially excited and placed between the camera and objects taken by the camera so as to regulate the vertical and horizontal scanning signals, and control the sequence of the three primary colours read from a brightness-changing signal series, or from a digital or analogue source of image signals containing the above-mentioned signals, the scanning and control signals being transmitted to a displaying screen which includes another three primary colour-filtering assembly for synchronically displaying the picture in the order of the three primary colours, thereby creating a colour picture effect through the persistence of vision of the three primary colours. Known systems of this type are described in US-A- 2 740 831 and GB-A- 656 516.

The present invention provides a colour television system comprising:
a) a camera including a light-sensitive medium, means for scanning the light-sensitive medium to detect the intensity of light reaching said medium, and a first colour-filtering assembly comprising three colour-filtering screens arranged to overlay one another so as to be serially superimposed between an image source and the scanning means, said screens being individually activatable to filter light of a respective one of the three primary colours in sequence;
b) means for synchronising the activation of said screens and the scanning of the light-sensitive medium;
c) means for transmitting an image together with horizontal and vertical synchronisation signals, and filter activation signals indicative of the sequence of activation of the colour-filtering screens;
d) means for receiving said image, said scanning synchronisation signal and said filter activation signals;
e) a display including a picture tube and a second colour-filtering assembly including individually-activatable screens corresponding to the colour-filtering screens of the camera and arranged to overlay one another and thereby be superimposed between the picture tube and a viewer and activation means for causing the screens of the display to be activated in response to the filter activation signals according to said sequence in synchronisation with the vertical and horizontal synchronisation signals;
   wherein the second colour-filtering assembly is fixed to the picture tube and the first colour-filtering assembly is fixed with respect to the light-sensitive medium, and wherein the synchronising means is such as to regulate the order of colour changing by switching the screens between a transparent state and a colour-filtering state,
   characterised in that the strength of each colour-filtering screen is adjusted by exciting the power supply in order to obtain varying brightness of each one of the primary colours in turn.

The invention will now be described in greater detail, by way of example, with reference to the drawings, in which;-
Figure 1 is a schematic view of a camera/transmitter synthetic colour television constructed in accordance with the invention;
Figure 2 is a schematic view of the receiver and display of the synthetic colour television system of Figure 1;
Figure 3 is a block diagram of the preferred camera and transmitter of Figure 1; and
Figure 4 is a block diagram of the preferred receiver and display of Figure 2.

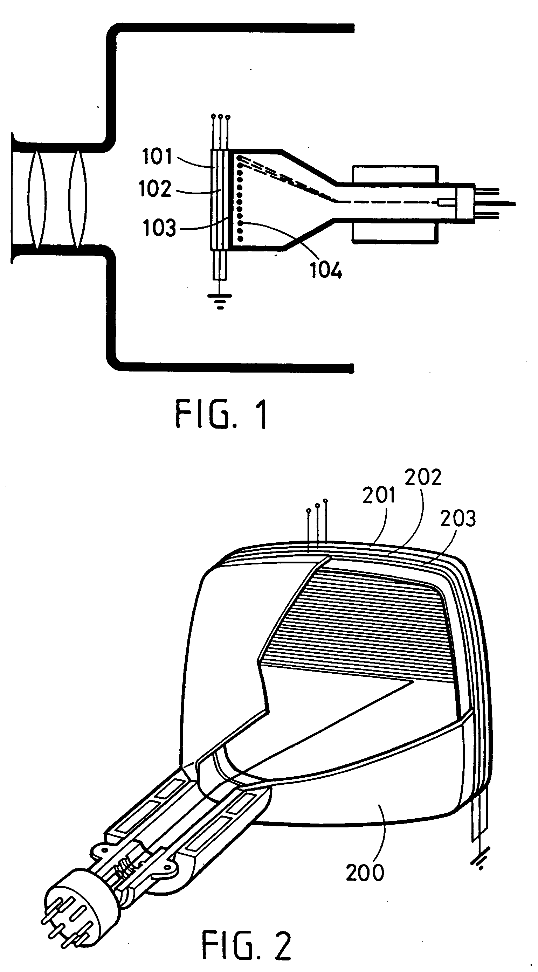

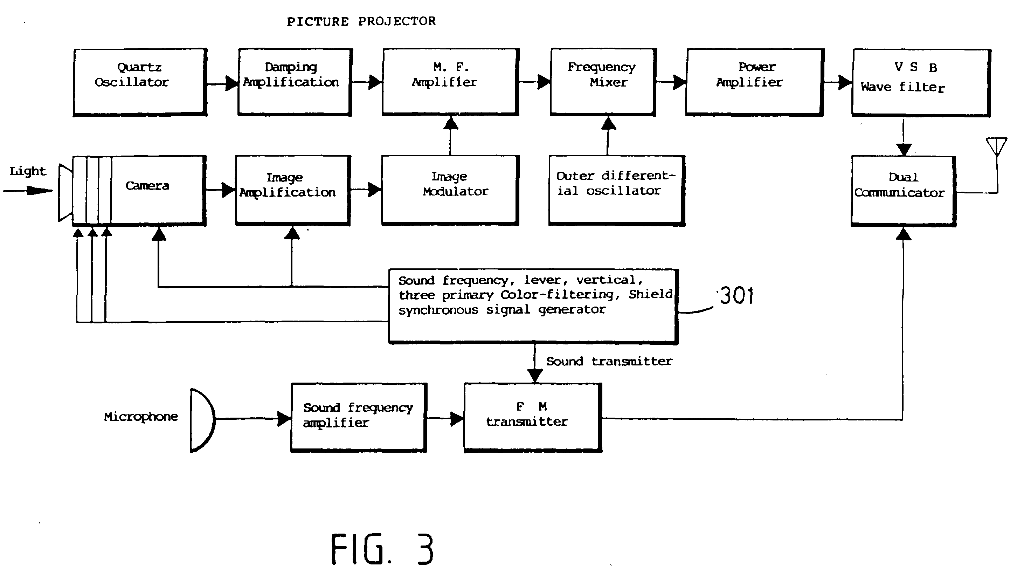

The synthetic colour television system of the preferred embodiment includes a colour-filter for the three primary colours, and a brightness-sensitive medium in which the colour-filtering for the three primary colours is sequentially excited so as to regulate the vertical and horizontal scanning signals, and control the orderly excitation signal sequence for the three primary colours read from a brightness-changing signal series, or from a digital or analogue source of preliminary image signals containing the above-mentioned signals transmitted to the displaying screen. A representation of the three primary colour filtering screen displays synchronically the picture in the order of the three primary colours, thereby creating a colour picture effect through the persistence of vision of the three primary colours, more specifically the present invention includes:
1. As shown in Figure 1, a brightness-sensitive camera with a colour filter for the three primary colours is used for sensing a change in brightness and for testing the strength of the signals and telecast system according to the order of the scanning. The camera is conventional except for the inclusion of a colour-filter assembly for the three primary colours, the assembly including filter elements serially overlapped between the camera lens and the light-sensitive layer 104 of the camera, the filter elements including a red filter element 101, a green filter element 102, and a blue filter element 103. Each filter may, for example, have a different gas filling in the interior of a transparent hollow panel, the transparent hollow panels being excited by means of dielectric poles. Alternatively, the filters may be formed from dielectric materials capable of colour change, such as liquid crystal display (LCD). The filter elements have a special synchronising scanning period for regulating the order of colour changing so as to make the camera transmit, in order, the brightness and strength of signals from the horizontal and vertical scanning of the self sensitive layer during periodic primary colour filtering by switching the colour filters between a transparent state and a state in which a colour-filtering effect is obtained. The strength of each colour-filtering screen can be adjusted by adjusting the duty cycle of the excitation power supply.
2. As shown in Figure 3, a synchronising circuit provides synchronous scanning signals for the three primary colours, in order, and the vertical/horizontal scanning video signals for scanning the light sensitive medium, and establishes a synchronous relationship between the colour synchronisation signals and the vertical and horizontal signals. The respective signals can be transmitted through cables or by radio-frequency broadcast to a monitor, or can be recorded and stored on a tape or a CD or other kinds of stationary/dynamic memory media.
3. In the case of digital storage, a preliminary image input source transmits the digital signals from RAM, ROM, soft/hard disc, or tape to the display.
4. As shown in Figure 2, the synthetic colour television system includes a display in the form of a conventional cathode ray tube 200 for the display of images by means of the change of the brightness, and for the display of the images according to the received signals in order of brightness-changing through vertical/horizontal scanning. The colour-filtering screens 201, 202, 203 for the three primary colours, which are constructed by LCD elements, or as solid dielectric colour displays, are overlappedly fixed on the displaying screen of the above-mentioned picture-tube. Each colour-filtering screen is controlled by means of the camera or preliminary image input source in synchronism with the vertical and horizontal scanning signal in the order of dielectricity creating a colour picture effect through the persistence of vision of the three primary colours.

Referring again to Figure 3, the preferred video camera is connected with an audio frequency source, a vertical/horizontal synchronous generator, a conventional black-and-white camera and transmission system, and the control over the synchronous signal generator 301 of the three primary colour filtering screens can produce different colour light according to the order of excitation. In each colour cycle, the light sensitive layer of the camera tube is vertically/horizontally scanned at least once, and the signals it gets are as follows. When the first primary colour filtering screen is activated, the brightness of the sensitive layer of the camera tube is obtained by scanning. When the second primary colour filtering screen is activated, a first sample of the brightness of the sensitive layer of the camera tube is also obtained by scanning. Finally, another brightness scan is made when the third primary colour filtering screen is activated. The system thus works periodically and cyclingly. When each primary colour filtering screen is working, it will transmit setup signals for synchronous identification of when each primary colour filtering screen is working.

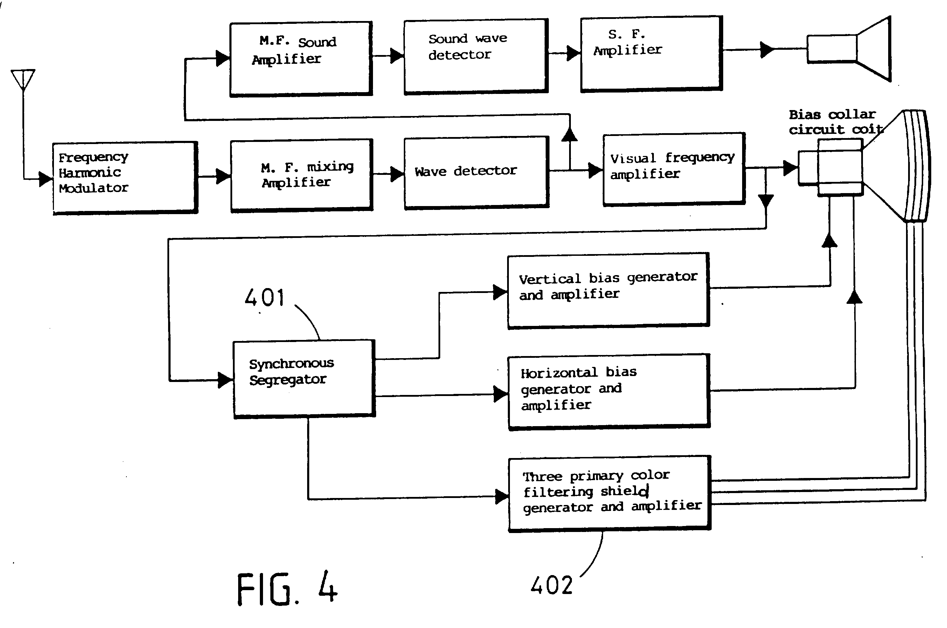

As shown in Figure 4, the picture display is connected with the synchronous segregator 401 of a conventional black-and-white picture receiver, and is controlled by the generator and an amplifier 402 of the three primary colour filtering assembly so as to make the three primary colour filtering screens produce relative colour in accordance with the excitation order of the setup signals of the three primary colours mentioned above. Under each situation of coloured light, the picture tube screens of the display are vertically/horizontally controlled to scan at least once, resulting in ordering of the input signals such that, when each of the first, second and third primary colour filtering screens is activated, the indicating scanning of the brightness for the picture tube occurs. As with the camera, the colour filtering screens of the display operate periodically and cyclingly, which results in a synthetic colour display function.

The technology of this system is thus the same as that of a conventional black-and-white picture tube, except that it includes circuitry for scanning synchronous signals of the three primary colour screens, which can synchronously drive the transparent hollow panel colour filtering screens, and which are fixed between the sensitive layer of the camera screen and objects taken by the camera, and which can produce the three primary colours. In this way, the video synthetic colour television system using periodically-switched colour filters for the three primary colours provided.

## Claims

1. A colour television system comprising:
a) a camera including a light-sensitive medium (104), means for scanning the light-sensitive medium to detect the intensity of light reaching said medium, and a first colour-filtering assembly comprising three colour-filtering screens (101, 102, 103) arranged to overlay one another so as to be serially superimposed between an image source and the scanning means, said screens being individually activatable to filter light of a respective one of the three primary colours in sequence;
b) means for synchronising (301) the activation of said screens and the scanning of the light-sensitive medium;
c) means for transmitting an image together with horizontal and vertical synchronisation signals, and filter activation signals indicative of the sequence of activation of the colour-filtering screens;
d) means for receiving said image, said scanning synchronisation signal and said filter activation signals;
e) a display (200) including a picture tube and a second colour-filtering assembly including individually-activatable screens (201, 202, 203) corresponding to the colour-filtering screens of the camera and arranged to overlay one another and thereby be superimposed between the picture tube and a viewer, and activation means for causing the screens of the display to be activated in response to the filter activation signals according to said sequence in synchronisation with the vertical and horizontal synchronisation signals;
wherein the second colour-filtering assembly is fixed to the picture tube and the first colour-filtering assembly is fixed with respect to the light-sensitive medium, and wherein the synchronising means is such as to regulate the order of colour changing by switching the screens between a transparent state and a colour-filtering state,
characterised in that the strength of each individual colour-filtering screen is adjusted by exciting the power supply in order to obtain varying brightness of each one of the primary colours in turn.

2. A system as claimed in claim 1, wherein each of the colour-filtering screens of the camera is constituted by a respective hollow, gas-filled panel.

3. A system as claimed in claim 1, wherein each of the colour-filtering screens of the camera is constituted by a respective dielectric screen.

4. A system as claimed in any one of claims 1 to 3, wherein each of the colour-filtering screens of the display is constituted by a respective hollow, gas-filled panel.

5. A system as claimed in any one of claims 1 to 3, wherein each of the colour-filtering screens of the display is constituted by a respective dielectric screen.

6. A system as claimed in any one of claims 1 to 5, wherein the synchronising means is constituted by a synchronous signal generator.

7. A system as claimed in any one of claims 1 to 6, wherein the activation means of the display is constituted by a synchronous segregator.

8. A colour television system comprising:
a) a display including a picture tube (200) and a colour-filtering assembly including individually-activatable screens (201, 202, 203) corresponding to colour-filtering screens of a camera and arranged to overlay one another and thereby be superimposed between the picture tube and a viewer;
b) means for transmitting an image together with horizontal and vertical synchronisation signals, and filter activation signals indicative of the sequence of activation of the colour-filtering screens;
c) means for receiving said image, said scanning synchronisation signal and said filter activation signals; and
d) activation means for causing the screens of the display to be activated in response to the filter activation signals according to said sequence in synchronisation with the vertical and horizontal synchronisation signals;
wherein the colour-filtering assembly is fixed to the picture tube, and wherein the synchronising means is such as to regulate the order of colour changing by switching the screens between a transparent state and a colour-filtering state, characterised in that the strength of each individual colour-filtering screen is adjusted by exciting the power supply in order to obtain varying brightness of each one of the primary colours in turn.

9. A system as claimed in claim 8, wherein each of the colour-filtering screens of the display is constituted by a respective hollow, gas-filled panel.

10. A system as claimed in claim 8, wherein each of the colour-filtering screens of the display is constituted by a respective dielectric screen.

11. A system as claimed in any one of claims 8 to 10, wherein the activation means of the display is constituted by a synchronous segregator.

## Patentansprüche

1. Farbfernseh-System bestehend aus:
a) einer Kamera mit einem lichtempfindlichen Medium (104), Mitteln zur Abtastung des lichtempfindlichen Mediums zur Erfassung der Intensität des das Medium erreichenden Lichts und einer ersten Farbfilter-Anordnung mit drei Farbfilter-Schirmen (101, 102, 103), die so angeordnet sind, daß sie sich gegenseitig überlagern, so daß sie in Serie übereinander gelagert sind zwischen einer Bildquelle und den Abtastmitteln, wobei die Schirme individuell betätigbar sind, um ein Licht einer entsprechenden der drei Grundfarben der Reihe nach zu filtern;
b) Mitteln zur Synchronisation (301) der Aktierung der Schirme und dem Abtasten des lichtempfindlichen Mediums;
c) Mitteln zum Übertragen eines Bildes mit horizontalen und vertikalen Synchronisationssignalen und Filterbetätigungssignalen, die bezeichnend für die Betätigungssequenz der Farbfilterschirme sind;
d) Mitteln zum Empfangen des Signals, des Abtastsynchronisationssignals und der Filterbetätigungssignale;
e) einem Display (200) mit einer Bildröhre, einer zweiten Farbfilteranordnung mit individuell betätigbaren Schirmen (201, 202, 203), die den Farbfilterschirmen der Kamera entsprechen und einander überlagernd an_ geordnet sind und damit übereinander gelagert sind zwischen der Bildröhre und einem Betrachter, und Betätigungsmitteln, um die Schirme des Displays in Abhängigkeit von den Filterbetätigungssignalen entsprechend der Synchronisationssequenz mit den vertikalen und horizontalen Synchronisationssignalen zu betätigen;
wobei die zweite Farbfilteranordnung mit der Bildröhre verbunden ist und die erste Farbfilteranordnung im Verhältnis zu dem lichtempfindlichen Medium angeordnet ist, und wobei die Synchronisierungsmittel so ausgebildet sind, um die Abfolge des Farbwechsels durch Schalten des Bildschirms zwischen einer durchlässigen Stellung und einer farbfilternden Stellung zu steuern,
**dadurch gekennzeichnet**, daß die Stärke von jedem indiduellen farbfilterndem Schirm einstellbar ist durch Betätigung der Energieversorgung, um unterschiedliche Helligkeiten jeder der drei Grundfarben der Reihe nach zu erhalten.

2. System gemäß Anspruch 1, wobei jeder der farbfilternden Schirme der Kamera ein entsprechendes hohles, gasgefülltes Paneel aufweist.

3. System gemäß Anspruch 1, wobei jeder der farbfilternden Schirme der Kamera einen entsprechenden dielektrischen Schirm aufweist.

4. System gemäß einem der Ansprüche 1-3, wobei jeder der farbfilternden Schirme des Displays ein entsprechendes hohles, gasgefülltes Paneel aufweist.

5. System gemäß einem der Ansprüche 1-3, wobei jeder der farbfilternden Schirme des Displays einen entsprechenden dielektrischen Schirm aufweist.

6. System gemäß einem der Ansprüche 1-5, wobei die Synchronisationsmittel einen Synchronsignalgenerator aufweisen.

7. System gemäß einem der Ansprüche 1-6, wobei die Betätigungsmittel des Displays einen Synchronabscheider auf_ weisen.

8. Farbfernsehsystem bestehend aus:
a) einem Display mit einer Bildröhre (200) und einer Farbfilteranordnung mit individuell betätigbaren Schirmen (201, 202, 203), die den Farbfilterschirmen einer Kamera entsprechen und einander überlagernd angeordnet sind, um übereinander gelagert zwischen einer Bildröhre und einem Betrachter zu sein;
b) Mitteln zur Übertragung eines Bildes zusammen mit horizontalen und vertikalen Synchronisationssignalen und Filterbetätigungssignalen, die bezeichnend sind für die Betätigungsfrequenz der Farbfilterschirme;
c) Mitteln zum Empfangen des Signals, des Abtastsynchronisationssignals und des Filterbetätigungssignals und
d) Betätigungsmitteln, welche die Schirme des Displays in Abhängigkeit von den Filterbetätigungssignalen aktivieren entsprechend der Sequenz der Synchronisation von den vertikalen und horizontalen Synchronisationssignalen,
wobei die Farbfilteranordnung an der Bildröhre befestigt ist und wobei die Synchronisationsmittel die Reihenfolge des Farbwechsels steuert durch Schalten der Schirme zwischen einem durchlässigen Zustand und einem farbfilternden Zustand, **dadurch gekennzeichnet**, daß die Stärke von jedem individuellen Farbfilterschirm einstellbar ist durch Anregung der Energieversorgung, um unterschiedliche Helligkeiten jeder der drei Grundfarben der Reihe nach zu erhalten.

9. System gemäß Anspruch 8, wobei jeder der farbfilternden Schirme des Displays ein entsprechendes hohles, gasgefülltes Paneel aufweist.

10. System gemäß Anspruch 8, wobei jeder der farbfilternden Schirme des Displays einen entsprechenden dielektrischen Schirm aufweist.

11. System gemäß einem der Ansprüche 8-10, wobei die Betätigungsmittel des Displays einen Synchronabscheider aufweisen.

## Revendications

1. Système de télévision couleur comprenant :
a) une caméra comportant un milieu photosensible, un moyen de balayage du milieu photosensible en vue de détecter l'intensité de la lumière atteignant ce milieu et un premier ensemble de filtrage de la couleur comprenant trois masques de filtrage des couleurs (101, 102, 103) se superposant l'un l'autre de façon à s'interposer en série entre une source d'image et le moyen de balayage, ces masques étant activables individuellement pour filtrer la lumière de l'une des couleurs primaires respectives en séquence ;
b) des moyens de synchronisation (301) de l'activation des masques et du balayage du milieu photosensible ;
c) des moyens pour transmettre une image et ses signaux de synchronisation horizontale et verticale et des signaux d'activation du masque indicatifs de la séquence d'activation du masque de filtrage des couleurs ;
d) des moyens de réception de cette image, de ce signal de synchronisation du balayage et de ces signaux d'activation du masque ;
e) un écran (200) comprenant un tube-image et un second ensemble de filtrage des couleurs se composant de masques (201, 202, 203) activables individuellement correspondant aux masques de filtrage des couleurs de la caméra et disposés pour se superposer l'un l'autre et ainsi s'interposer entre le tube-image et un spectateur, et des moyens d'activation pour provoquer l 'activation des masques en réponse aux signaux d'activation du filtre selon ladite séquence en synchronisation avec les signaux de synchronisation verticale et horizontale ;
système de télévision couleur dans lequel le second ensemble de filtrage des couleurs est fixé au tube-image et dans lequel le premier ensemble ce filtrage des couleurs est fixé au milieu photosensible et dans lequel les moyens de synchronisation sont prévus de façon à réguler l'ordre du changement des couleurs en commutant les masques d'un état transparent à un état de filtrage des couleurs,
caractérisé en ce que le pouvoir de chaque masque individuel de filtrage des couleurs est réglé en excitant l'alimentation électrique on vue d'obtenir à leur tour une variation de brillance de chacune des couleurs primaires.

2. Système selon la revendication 1 caractérisé en ce que chaque masque de filtrage des couleurs de la caméra est constitué par une plaquette creuse remplie d'un gaz.

3. Système selon la revendication 1 caractérisé en ce que chaque masque de filtrage des couleurs de la caméra est constitué par un écran diélectrique.

4. Système selon l'une quelconque des revendications 1 à 3 caractérisé en ce que chaque masque de filtrage des couleurs de l'écran est constitué par une plaquette creuse remplie d'un gaz.

5. Système selon l'une quelconque des revendications 1 à 3 caractérisé en ce que chaque masque de filtrage des couleurs de l'écran est constitué par un écran diélectrique.

6. Système selon l'une quelconque des revendications 1 à 5 caractérisé en ce que le moyen de synchronisation est un générateur de signal de synchronisation.

7. Système selon l'une quelconque des revendications 1 à 6 caractérisé en ce que le moyen d'activation de l'écran est un ségrégateur synchronisé.

8. Système de télévision en couleur comprenant:
a) un écran comprenant un tube-image (200) et un ensemble de filtrage des couleurs se composant de masques (201, 202, 203) activables individuellement correspondant aux masques de filtrage des couleurs d'une caméra et disposés pour se superposer l'un l'autre et ainsi s'interposer entre le tube-image et le spectateur ;
b) des moyens pour transmettre une image avec ses signaux de synchronisation horizontale et verticale, et des signaux d'activation du filtrage indicateurs de la séquence d'activation des masques de filtrage des couleurs ;
c) des moyens pour recevoir cette image, ce signal de synchronisation de balayage et de ces signaux d'activation du filtrage et,
d) des moyens d'activation pour provoquer l'actionnement des masques de l'écran an réponse aux signaux d'activation du filtrage selon ladite séquence, en synchronisation avec les signaux de synchronisation verticale et horizontale ;
dans lequel l'ensemble de filtrage des couleurs est fixé sur le tube-image et dans lequel le moyen de synchronisation est prévu de façon à réguler l'ordre de changement des couleurs an commutant les masques d'un état transparent à un état de filtrage des coulers caractérisé an ce que le pouvoir de chaque masque individuel de filtrage des couleurs est réglé en excitant l'alimentation électrique an vue d'obtenir à leur tour une variation de brillance de chacune des couleurs primaires.

9. Système selon la revendication 8 caractérisé en ce que chacun des masques de filtrage des couleurs de l'écran est constitué par une plaquette creuse remplie de gaz.

10. Système selon la revendication 8 caractérisé en ce que chacun des masques de filtrage des couleurs de l'écran est constitué par un écran diélectrique.

11. Système selon l'une quelconque des revendications 8 à 10, caractérisé en ce que le moyen d'activation de l'écran est un segrégateur synchronisé.
